Europäisches Patentamt

**European Patent Office**

**Office européen des brevets**

(19)

(11) Veröffentlichungsnummer: **0 085 938**
**A2**

(12) # EUROPÄISCHE PATENTANMELDUNG

(21) Anmeldenummer: **83100973.3**

(22) Anmeldetag: **02.02.83**

(51) Int. Cl.³: **B 60 S 3/06**
**A 46 B 7/10**

(30) Priorität: **04.02.82 DE 3203686**

(43) Veröffentlichungstag der Anmeldung:
**17.08.83 Patentblatt 83/33**

(84) Benannte Vertragsstaaten:
**AT BE CH DE FR GB IT LI LU NL SE**

(71) Anmelder: **Lorenz, Wulf**
**Hofteichstrasse 24a**
**D-2300 Kiel 1(DE)**

(71) Anmelder: **Langner, Wolfgang**
**Funkenberg 38**
**D-2358 Kaltenkirchen(DE)**

(72) Erfinder: **Lorenz, Wulf**
**Hofteichstrasse 24a**
**D-2300 Kiel 1(DE)**

(72) Erfinder: **Langner, Wolfgang**
**Funkenberg 38**
**D-2358 Kaltenkirchen(DE)**

(74) Vertreter: **Eggert, Hans-Gunther, Dr.**
**Räderscheidtstrasse 1**
**D-5000 Köln 41(DE)**

(54) **Rundumwaschbürste, insbesondere für Kraftfahrzeugwaschanlagen.**

(57) Die Erfindung betrifft eine Rundumwaschbürste, insbesondere für kraftfahrzeugwaschanlagen, mit einer vertikal angeordneten angetriebenen Bürstenwalze, bei der die Bürstenwalze in mindestens zwei vertikal hintereinander liegende Bürstenabschnitte (61, 64, 74) unterteilt ist, wobei mindestens ein Bürstenabschnitt (74) in eine zur Drehrichtung der übrigen Bürstenabschnitte (61, 64) umgekehrte Richtung drehbar ist.

EP 0 085 938 A2

./...

Croydon Printing Company Ltd

FIG.1

PATENTANWALT DR. HANS-GUNTHER EGGERT, DIPLOMCHEMIKER

5 KÖLN 41, Räderscheidtstr. 1

- 1 -

B e s c h r e i b u n g :

Die Erfindung betrifft eine Rundumwaschbürste, insbesondere für Kraftfahrzeugwaschanlagen.

Beim Reinigen von Fahrzeugen, insbesondere PKW's in Portal-Waschanlagen oder sogenannten Waschstraßen treten an schwer zugänglichen Stellen des Fahrzeuges immer wieder Schwierigkeiten auf, eine sorgfältige und vollständige Reinigung des Fahrzeugs zu erreichen. Zu diesen schwer zugänglichen Stellen an Kraftfahrzeugen gehören insbesondere vorstehende Teile, wie Stoßstangen, Außenspiegel und die Nummernschilder, sowie zurückversetzte Karosserieteile, wie die Bereiche unterhalb der Stoßstangen, der unteren seitlichen Holme, der Frontspoiler oder dergleichen.

Insbesondere der Bereich um und unterhalb der Stoßstangen sowie der entsprechenden unteren Seitenbereiche von Personenkraftwagen sind mit herkömmlichen Rundumwaschbürsten, also Waschbürsten, die paarweise um das gesamte Fahrzeug links- bzw. rechts herum geführt werden und sowohl die Seiten- als auch die Front- und Heckpartien reinigen müssen, nur unzureichend zu säubern. Insbesondere aufgrund der Montage der Nummernschilder, z.B. an den vorderen Stoßstangen, wie bei den in Deutschland zugelassenen Fahrzeugen, kommt es immer wieder zu Problemen, weil die Nummernschilder nur durch zwei Fixpunkte an der Stoßstange befestigt sind und die Bürstenhaare der Bürstenwalzen hinter die vorstehenden oder die Stoßstange überragenden Teile der Nummernschilder greifen und diese dann abbiegen oder sogar abreißen. Es ist aber auch schon vorgekommen, daß sich die Bürsten im Bereich der Nummernschilder derart verankert haben, daß die Rotation der Bürste behindert und diese beschädigt wurde.

Um derartige Schäden beim Reinigen zu vermeiden, sind verschiedene Lösungsvorschläge gemacht worden.

Man hat die in der Regel paarweise arbeitenden Rundumwaschbürsten, die mittig im Front- bzw. Heckbereich eines Kraftfahrzeuges starten, wobei eine Bürste einen entsprechenden Vorlauf hat, aus der Mitte jeweils nach außen herausgestellt, so daß ein Eingriff im Bereich der Nummernschilder vermieden wird. Bei einer solchen Anordnung der Waschbürsten wird zwar eine Beschädigung, insbesondere der Nummernschilder zuverlässig verhindert, gleichzeitig bleibt jedoch der gesamte Bereich um die Nummernschilder ungereinigt.

Weiterhin sind Rundumwaschbürsten bekannt, bei denen der untere Bürstenabschnitt in Höhe der Nummernschilder eines Kraftfahrzeuges abgeschnitten bzw. verkürzt ist, so daß die Bürstenhaare nicht hinter die Nummernschilder greifen und diese beschädigen können. Nachteilig hierbei ist jedoch, daß die gekürzten Bürstenhaare auch die übrigen unteren Partien des Fahrzeugs, an denen die Rundumwaschbürste vorbeigeführt wird, und die meist besonders verschmutzt sind, nicht oder nur unzureichend aufgrund der gekürzten Länge erreichen, so daß der Reinigungseffekt im gesamten unteren Fahrzeugbereich entsprechend der Höhe der gekürzten Bürsten unbefriedigend ist.

Der Erfindung liegt die Aufgabe zugrunde, eine Rundumwaschbürste, insbesondere für Kraftfahrzeugwaschanlagen zur Verfügung zu stellen, die insbesondere den unteren Fahrzeugbereich um und unter den Stoßstangen, insbesondere im Bereich der Nummernschilder eines Kraftfahrzeuges sowie im Bereich der seitlichen unteren Holme gut reinigt und die auch im übrigen eine saubere und zuverlässige Reinigung der weiteren Front-, Heck- und Seitenpartien eines Kraftfahrzeuges ermöglicht.

Erfindungsgemäß wird dies durch eine Rundumwaschbürste mit einer vertikal angeordneten, angetriebenen Bürstenwalze erreicht, bei der die Bürstenwalze in mindestens zwei vertikal hintereinanderliegende Bürstenabschnitte unterteilt ist, wobei mindestens ein Bürstenabschnitt in eine zur Drehrichtung der übrigen Bürstenabschnitte umgekehrte Richtung drehbar ist.

Durch die unterschiedliche Drehrichtung einzelner Bürstenabschnitte der Rundumwaschbürste wird erreicht, daß die Drehrichtung der Bürstenabschnitte stets so gewählt werden kann, daß die im Eingriff mit den Nummernschildern befindlichen Bürstenhaare nach außen drehen und so ein Hintergreifen der überstehenden Teile der Nummernschilder zuverlässig verhindert wird.

Dazu wird die Rundumwaschbürste so unterteilt, daß ein unterer Bürstenabschnitt im Eingriff mit dem Nummernschild im Frontbereich eines Kraftfahrzeuges und ein anderer Bürstenabschnitt, der in einer zur Drehrichtung des unteren Bürstenabschnittes umgekehrten Richtung rotiert, im Eingriff mit dem Nummernschild im Heckbereich eines Kraftfahrzeuges steht. Hierdurch wird erreicht, daß, wenn ein Paar von Rundumwaschbürsten beidseitig um das Fahrzeug herumgeführt wird, sich beide Bürstenabschnitte in Bezug auf die vorderen bzw. hinteren Nummernschilder nach außen drehen und so nicht hinter die Nummernschilder greifen können, da die Höhe der vorderen und hinteren Nummernschilder eines Kraftfahrzeuges unterschiedlich ist. Während die Nummernschilder im Frontbereich eines Kraftfahrzeuges in Deutschland etwa im Abstand von 40 cm zum Boden angebracht sind, sind die Hecknummernschilder etwa in einer Höhe von 60 cm, vom Boden gerechnet, angeordnet. Vorzugsweise erstreckt sich in einem solchen Fall der untere Bürstenabschnitt bis etwa zu einer Höhe von 50 cm über den Boden, so daß er einerseits zuverlässig den Bereich der tiefer gelegenen, vorderen Nummernschilder erfaßt und reinigen kann, jedoch nicht in den Bereich der hinteren, höher gelegenen Nummernschilder eingreift. Durch die Führung der Rundumwaschbürsten um das Fahrzeug herum, weist der untere Bürstenabschnitt dann nämlich in Bezug auf die hinteren Nummernschilder eine umgekehrte, nach innen gerichtete Drehrichtung auf und würde unter Umständen die hinteren Nummernschilder hintergreifen und umbiegen oder abreißen. Dieser Fahrzeugteil wird jedoch durch den sich an den unteren Bürstenabschnitt anschliessenden, darüber liegenden Bürstenabschnitt gereinigt, der in eine zum unteren Bürstenabschnitt umgekehrte Richtung dreht. Die Drehrichtung des höheren Bürstenabschnittes ist damit in Bezug auf die hinteren Nummernschilder gleichfalls nach außen gerichtet und ein Hintergreifen der Bürstenhaare hinter das hintere Nummernschild wird zuverlässig verhindert. Das Fahrzeug kann, da die beiden Rundumwaschbürsten auch ohne weiteres mittig im Front- bzw. Heckbereich eines Kraftfahrzeuges angesetzt und danach um das Fahrzeug herumgeführt werden können, optimal gereinigt werden.

Die einzelnen Bürstenabschnitte können erfindungsgemäß mit einem einzigen oder verschiedenen Antriebsorganen angetrieben werden, wobei jedoch eine, mit einem Antrieb versehene Rundumwaschbürste bevorzugt wird. Dazu werden beispielsweise die einzelnen Bürstenabschnitte über eine einzige, vertikale Welle angetrieben, die sich mittig durch die Bürstenwalze erstreckt, wobei der untere Bürstenabschnitt in Drehrichtung der Welle von dieser unmittelbar angetrieben wird und ein oder mehrere der übrigen Bürstenabschnitte über mindestens ein auf der Welle angeordnetes Getriebe zur Umkehrung der Drehrichtung der Welle angetrieben werden. Eine solche Anordnung ermöglicht es, mit einem einzigen Antrieb die einzelnen Bürstenabschnitte in eine zueinander entgegengesetzte Richtung zu bewegen, was ohne weiteres den Umbau bestehender, aus einer einzigen, einheitlichen Bürstenwalze bestehenden Rundumwaschbürsten ermöglicht, die gleichfalls über eine einzige Welle angetrieben werden, sofern die Bürstenwalze in einzelne Bürstenabschnitte unterteilt wird.

In einer vorteilhaften Ausgestaltung der Erfindung ist die Rundumwaschbürste in drei Bürstenabschnitte unterteilt, wobei der untere Bürstenabschnitt unmittelbar auf die Welle aufgeflanscht ist, während ein mittlerer Bürstenabschnitt über eine im Abstand um die Welle geführte Hülse angetrieben wird, die im Eingriff mit einem auf der Welle angeordneten Getriebe zur Umkehrung der Drehrichtung steht. Diese Hülse kann gleichfalls zum direkten Antrieb eines oberen Bürstenabschnittes dienen, vorzugsweise wird der obere Bürstenabschnitt jedoch nur indirekt angetrieben, indem eine Kraftübertragung vom mittleren Bürstenabschnitt über eine Rutschkupplung auf den oberen Bürstenabschnitt erfolgt. Auf diese Weise kann eine erfindungsgemäße Rundumwaschbürste eine zusätzliche Sicherheitsfunktion erfüllen. Die Bürstenhaare des oberen Bürstenabschnittes dienen nämlich in der Regel zur Reinigung der Fahrzeugpartien im weiteren Fensterbereich, wo vorstehende Teile, wie Spiegel oder Antennen den Weg der Rundumwaschbürste stören und an denen sich die Bürstenhaare leicht verklemmen können. Durch die erfindungsgemäße Anordnung mit einer Rutschkupplung wird sichergestellt, daß, wenn die Bürstenhaare des oberen Bürstenabschnittes sich an den vorstehenden Kraftfahrzeugteilen verhaken oder festklemmen, der obere Bürstenabschnitt festgehalten wird und die vom mittleren Abschnitt übertragene Rotationsenergie unterbrochen wird, während sich sämtliche übrigen Bürstenabschnitte ohne weiteres weiter drehen und das Fahrzeug reinigen können. Die Anlage kann dann über entsprechende Schalteinrichtungen gestoppt und anschließend können die eingeklemmten Bürstenhaare befreit werden. Eine zusätzliche Sicherung wird durch eine spiralförmige Wicklung der Bürstenhaare auf der Bürstenwalze erreicht, so daß die Haare bei vorstehenden Teilen ausweichen können.

Eine erfindungsgemäße Rundumwaschbürste ermöglicht so nicht nur eine vollständige Reinigung sämtlicher Karosserieteile im Front-, Heck- und Seitenbereich eines Kraftfahrzeuges, sondern macht auch jegliche Steuerung überflüssig, um den Bürstenlauf zu garantieren, gleichzeitig wird mittels einer Rutschkupplung ein schonender und sicherer Waschvorgang der Fensterpartien eines Kraftfahrzeuges ermöglicht. Die erfindungsgemäße Rundumwaschbürste ist darüber hinaus äußerst kompakt und kann in bestehende, konventionelle, einteilige Rundumwaschbürsten ohne weiteres eingebaut werden, wenn die Rundumwaschbürste dazu in einzelne Bürstenabschnitte aufgeteilt wird.

Weitere Merkmale der erfindungsgemäßen Rundumwaschbürste sind Gegenstand der Unteransprüche.
Die Erfindung wird nachfolgend anhand der Zeichnung beispielhaft näher erläutert.
Dabei zeigen
Figur 1 einen Schnitt durch eine Ausführungsform einer erfindungsgemäßen Rundumwaschbürste, wobei die Bürstenhaare sowie der Ober- und Unterteil der Bürste weggelassen sind.
Figur 2 eine schematische, perspektivische Ansicht, zum Teil aufgeschnitten, einer Ausführungsform einer erfindungsgemäßen Rundumwaschbürste
Figur 3 schematisch eine Frontansicht zweier erfindungsgemäßer Rundumwaschbürsten in einer Waschstraße
Figur 4 schematisch eine Aufsicht auf zwei in einer Waschstraße angeordnete erfindungsgemäße Rundumwaschbürsten.

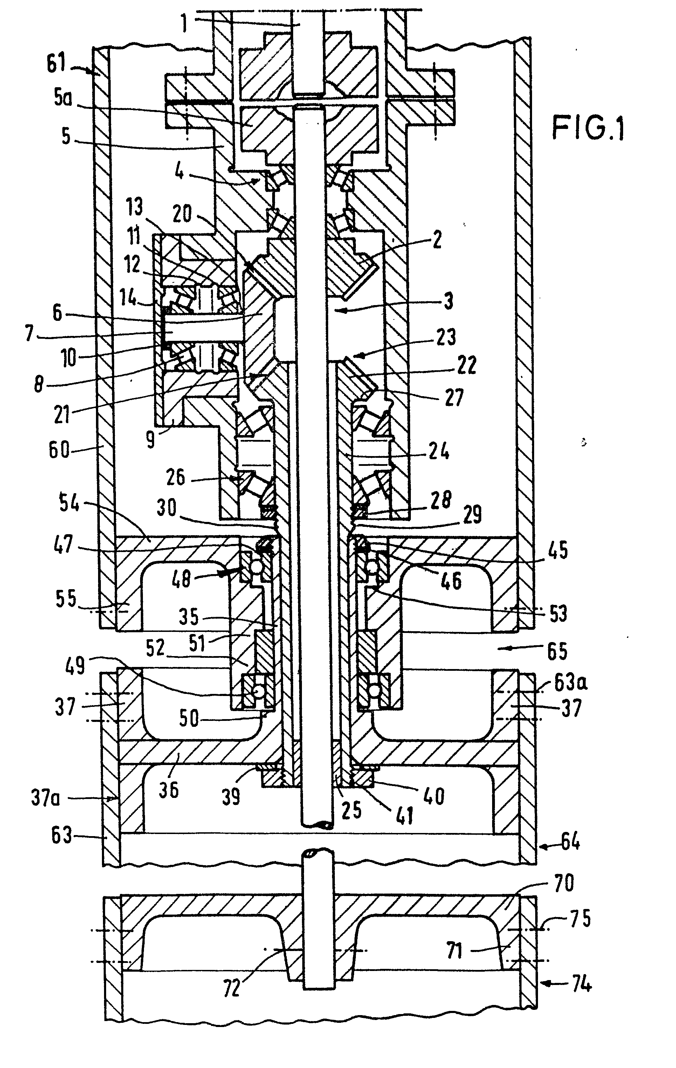

In Figur 1 ist eine Schnittzeichnung durch eine Ausführungsform einer erfindungsgemäßen Rundumwaschbürste dargestellt, wobei der obere und untere Teil der Waschbürste sowie die Bürstenhaare selber weggelassen worden sind. Die dargestellte Rundumwaschbürste besteht aus einer Welle 1, die über einen Antrieb (nicht dargestellt) in an sich bekannter Weise angetrieben wird. Der Antrieb kann dabei hydraulisch, pneumatisch oder elektrisch erfolgen. Die Antriebswelle wird in zwei im Abstand zueinander angeordneten Lagern (nicht dargestellt) mittels Schaft gehalten. Im Abstand zum oberen, angetriebenen Ende der Welle 1 ist auf dieser ein Ritzel 2 angeordnet, das Teil eines Getriebes 3 ist. Das Ritzel 2 sitzt unmittelbar auf der Welle 1 auf und wird in einem in O-Anordnung um die Welle 1 angeordnetem Walzenlager 4 geführt, das wiederum seitlich in einem um die Welle 1 geführten Gehäuse 5 aufsitzt und sich oben gegen einen im Gehäuse 5 angeordneten, auf der Welle 1 fest aufsitzenden Flansch 5a abstützt. Das als Kegelrad ausgebildete Ritzel 2 wirkt mit einem senkrecht zu diesem und parallel zur Welle 1 angeordneten Kegelrad 6 zusammen, das auf einer nach außen gerichteten Welle 7 mittig aufsitzt, die wiederum in einem in O-Anordnung eingebauten Walzenlager 8 geführt ist. Das Walzenlager 8 ist dabei in einem zylinderförmigen Lagergehäuse 9 angeordnet, das seitlich in dem mit einer entsprechenden seitlichen Öffnung versehenen Gehäuse 5 einsitzt. Zur Sicherung des Walzenlagers 8 ist am freien Ende der Welle 7 ein Sicherungsring 10 angeordnet. An der inneren Wand des Lagergehäuses 9 sind ferner Nuten 11, 12 zur Aufnahme von Sprengringen vorgesehen, die ebenso zur Sicherung des Walzenlagers 8 dienen, wie die am Übergangsbereich der Welle 7 auf das Kegelrad 6 vorgesehene Fase 13, gegen die sich das Walzenlager 8 nach innen abstützt. Insbesondere zur Vermeidung von Verschmutzungen ist das Lagergehäuse 9 außenseitig durch einen aufgeschraubten Gehäusedeckel 14 zugedeckt.

Das Kegelrad 6 greift auf der, dem Eingriffsbereich 20 zwischen Kegelrad 6 und Ritzel 2 gegenüberliegenden Seite 21 in die Verzahnung des Kopfes 22 eines Hohlkegelrades 23. Der Kopf 22 des Hohlkegelrades 23 ist ebenso wie die sich an den Kopf 22 anschließende, nach unten weisende Hülse 24 symmetrisch und im Abstand um die Welle 1 geführt und wird an ihrem unteren Ende durch eine Dichtung 25, beispielsweise aus Teflon, um die Welle 1 geführt. Anstelle der Dichtung 25 ist es beispielsweise ohne weiteres möglich, die Lagerung der Hülse 24 durch ein Nadellager zu sichern. Eine weitere Dichtung oder ein weiteres Lager im Abstand zu ersterem zur Führung der Hülse 24 ist vorteilhaft. Am gegenüberliegenden, unterhalb des Kopfes 22 des Hohlkegelrades 23 liegenden Ende der Hülse 24 ist diese auf einem Walzenlager 26 gelagert, das analog zu den Walzenlagern 4 und 8 eine O-Anordnung aufweist, wobei sich das Lager nach oben gegen die Rückseite 27 des Kegelradkopfes 22 abstützt. Am unteren Ende ist das Walzenlager 26 durch einen auf die Hülse 24 aufgeschraubten, mit einem Innengewinde versehenen Sicherungsring 28 aufgesetzt, wozu die Hülse 24 ein entsprechendes Außengewinde 29 aufweist. Die seitliche Führung des Walzenlagers 26 erfolgt an der Innenwandung des Lagergehäuses 9, wobei, wie bei den übrigen Walzenlagern bereits beschrieben, entsprechende Nuten für Sicherungsringe in der Gehäusewandung vorgesehen sind.

Unterhalb des Gewindes 29 weist die Hülse 24 eine nach innen weisende Fase 30 auf. Der Außendurchmesser der Hülse 24 im unteren Bereich ist deshalb entsprechend geringer. Gegen die Fase 30 stützt sich die obere Kante einer Hülse 35 ab, die auf der Hülse 24 fest aufsitzt und an ihrem unteren Ende einen horizontalen, runden Teller 36 besitzt, der senkrecht zur Welle 1 verläuft und an seinem äußeren Umfang vertikale Ansätze 37 aufweist, die einen Zylinder 37a mit einer zur Welle 1 parallelen Außenfläche bilden. Die Außenfläche ist dabei mindestens so hoch, daß ein darauf aufgeflanschter, aufgeschraubter oder sonst in irgendeiner geeigneten Weise fest montierter Bürstenabschnitt einer Bürstenwalze rotationsstabil aufsitzt. Die Hülse 35 bzw. der untere Boden 38 des Tellers 36 stützt sich gegen eine Ringdichtung 39 ab, die auf einem mit einem Innengewinde versehenen Sicherungsring 40 aufsitzt, der auf das untere freie Ende der Hülse 24 aufgeschraubt ist, wozu die Hülse 24 endseitig ein Außengewinde 41 aufweist.

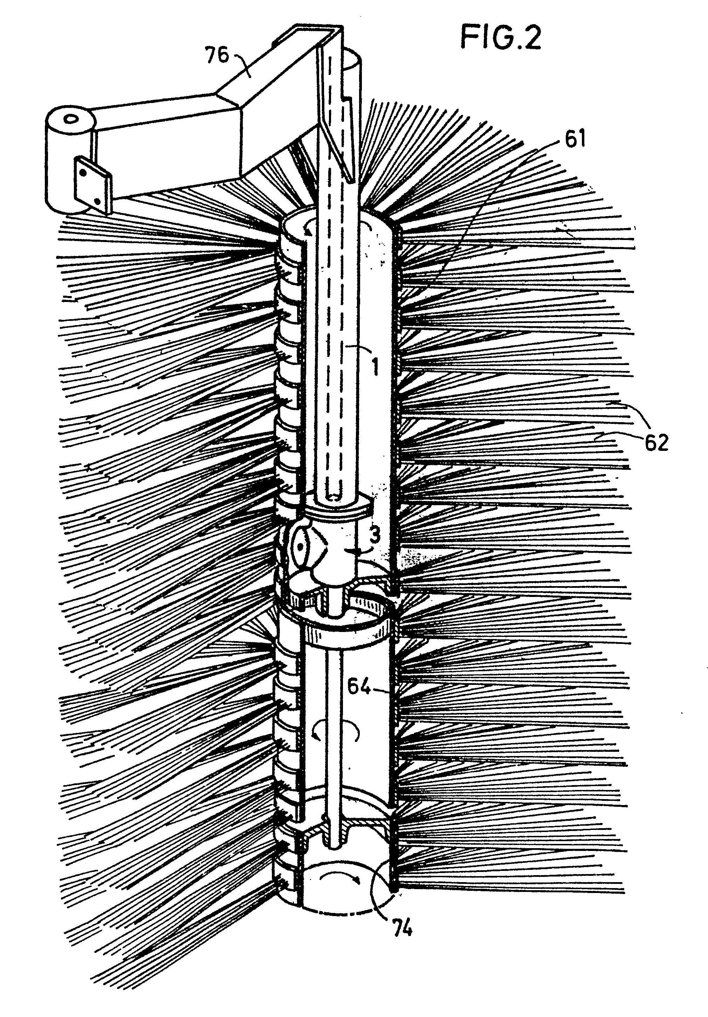

Auch das obere Ende der Hülse 35 ist mit einem Außengewinde versehen, auf dem ein Sicherungsring 45 mit einem Innengewinde aufsitzt, der mit einer Ringdichtung 46 unterlegt ist, gegen die sich der seitliche Außenrand des Lagerinnenrings 47 eines Kugellagers 48 abstützt, das um die Hülse 35 geführt ist. Im Abstand zum Kugellager 48 befindet sich um die Hülse 35 ein weiteres Kugellager 49, das sich nach unten gegen einen nach außen gerichteten Vorsprung 50 der Hülse 35 bzw. des Tellers 36 abstützt und das außenseitig gegen die Innenseite einer Hülse 51 anliegt, die zur Aufnahme der Kugellager 48 und 49 entsprechende Vor- und Rücksprünge 52, 53 aufweist. Die Hülse 51 erstreckt sich etwa vom Bereich des unteren Kugellagers 49 bis in den Bereich des oberen Kugellagers 48, wobei sich vom oberen Ende der Hülse 51 ein horizontaler, runder Teller 54 erstreckt, der endseitig, ebenso wie der Teller 36 eine vertikale, zylindrische Wand 55 besitzt, deren Außenfläche mit der der Ansätze 37 bzw. des Zylinders 37a fluchtet. Das untere Ende der vertikalen Wand 55 des Tellers 54 steht im Abstand zum oberen Ende der Ansätze 37 des Tellers 36. Auf der Umfangsfläche der Wand 55 ist eine Bürstenwalze 60, beispielsweise aus Aluminium angeordnet, die sich bis in den oberen freien Endbereich der Welle 1 erstreckt und den oberen Bürstenabschnitt 61 bildet. Die Höhe der Wand 55 ist wie die der Ansätze 37 so gewählt, daß der darauf montierte Bürstenabschnitt 61 rotationsstabil aufsitzt. Sofern notwendig kann im Abstand zur Wand 55 ein weiteres Führungsorgan (nicht dargestellt) für den Bürstenabschnitt 61 angeordnet werden. Auf der Oberfläche der Bürstenwalze 60 sind die in Figur 2 dargestellten Bürstenhaare 62, beispielsweise aus Kunststoff oder kunststoffummantelten textilen Fasern befestigt. Die untere Kante der zylindrischen Wand 55 schließt etwa mit der des oberen Bürstenabschnittes 61 ab oder überragt diesen geringfügig.

Auf der Außenwandung der Ansätze 37 ist in gleicher Weise wie auf der Wand 55 eine Bürstenwalze 63, beispielsweise durch Verschraubung 63a befestigt, die sich nach unten über die Ansätze 37 erstreckt und den mittleren Bürstenabschnitt 64 der Rundumwaschbürste bildet. Am oberen Ende schließen der zylindrische Ansatz 37 bzw. der mittlere Bürstenabschnitt bündig ab oder der zylindrische Ansatz 37 überragt den mittleren Bürstenabschnitt 64 geringfügig. Auch dieser Bürstenabschnitt weist selbstverständlich entsprechende, nach außen weisende Bürstenhaare 62 auf, wie sie in Figur 2 dargestellt sind.

Die obere Kante des zylindrischen Ansatzes 37 steht im Abstand zur unteren Kante der zylindrischen Wand 55, wobei der Abstand derart gewählt ist, daß zwischen beiden bzw. den Bürstenwalzen 60 und 63 eine Rutschkupplung 65 angeordnet werden kann, die zur Kraftübertragung vom oberen Rand der Ansätze 37 auf den unteren Rand der Wand 55 bzw. von der mittleren Bürstenwalze 63 auf die obere Bürstenwalze 60 dient. Als Rutschkupplung 65 kann prinzipiell jede Reibkupplung mit fest eingestellter Kupplungskraft verwendet werden. Dabei soll sich,wie bei allen Rutschkupplungen, die Normalkraft wenig mit dem Verschleißweg ändern (flache Federkennlinien) und die Kupplung gegen Dauerschlupf gesichert bzw. überwacht werden können. Die Rutschkupplung 65 ist zur Vereinfachung der zeichnerischen Darstellung nicht im Detail dargestellt.

Im Bereich des unteren freien Endes der Welle 1 ist ein Ringflansch 70 auf der Welle 1 befestigt, der an seiner Außenkante nach unten abgewinkelte Endbereiche 71 aufweist, deren zylindrische Außenfläche mit der der Ansätze 37 bzw. der Wand 55 fluchtet. Der Flansch kann beispielsweise durch Schrauben 72 auf der Welle 1 aufgeschraubt sein. Auf die vertikalen Außenflächen der Endbereiche 71 des Ringflansches 70 ist eine untere Bürstenwalze 74, beispielsweise durch Schrauben 75 aufgebracht, deren Oberkante im Abstand zur Unterkante der mittleren Bürstenwalze 63 angeordnet ist, so daß beide frei gegeneinander drehbar sind.

Die komplette Waschbürste ist in an sich bekannter Weise an einem am oberen Ende der Welle 1 befestigten horizontalem Arm 76 angeordnet, der auch einen nicht dargestellten Antrieb für die Welle 1 aufnimmt. Der Arm 76 wiederum ist an einem, ebenfalls an sich bekannten, nicht dargestellten Transportsystem angeordnet, das die dargestellte Waschbürste an den einzelnen Wagenpartien, wie nachfolgend noch näher beschrieben wird, vorbeiführt.

Normalerweise ist die Rundumwaschbürste derart aufgehängt, daß der untere Teil der Waschbürste in relativ geringem Abstand zum Boden angeordnet ist. Im dargestellten Ausführungsbeispiel ist dies gleichfalls so, wobei die untere Bürstenwalze 74, vom Boden aus gemessen, eine Höhe von etwa 40 bis 50 cm hat, so daß sie im Bereich des vorderen Nummernschildes eines PKW's ohne weiteres wirken kann, während die mittlere Bürstenwalze 63 sich in geringem Abstand von der Oberkante der unteren Bürstenwalze 74 bis etwa in den Bereich der seitlichen Türen eines PKW's erstreckt, d.h. daß die obere Kante der mittleren Bürstenwalze 63 etwa im Abstand von 80 cm bis 1 m vom Boden aus gemessen, angeordnet ist, die damit im Eingriff mit den hinteren Nummernschildern eines Kraftfahrzeuges steht. Die obere Bürstenwalze 60 erstreckt sich dann vom oberen Ende der mittleren Bürstenwalze 63 bzw. der Rutschkupplung 65 bis in den oberen freien Endbereich der Welle 1, wobei das obere Ende der oberen Bürstenwalze 60 in der Regel etwas höher liegt, als die Dachfläche eines zu waschenden Kraftfahrzeuges.

Die Funktionsweise einer erfindungsgemäßen Rundumwaschbürste wird nachfolgend beispielhaft näher beschrieben:

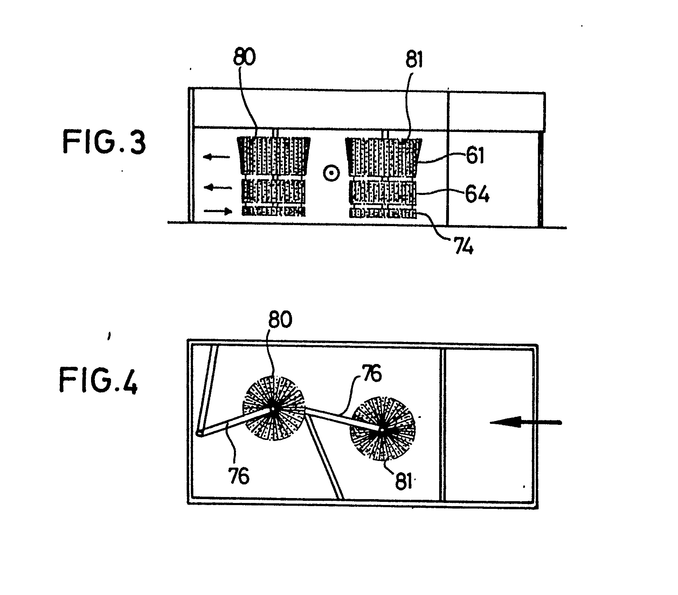

Ein Fahrzeug wird mit dem Frontbereich vorne weg in eine stationäre Portal- Autowaschanlage gefahren und abgestellt. Die am Ende der Waschanlage positionierten beiden Rundumwaschbürsten der erfindungsgemäßen Bauart werden dann über ein entsprechend gesteuertes Programm in Bewegung gesetzt. Alternativ kann das Fahrzeug auch in eine sogenannte Waschstraße gefahren werden, wobei es über entsprechende Antriebsmittel ( z.B. einen Kettentrieb) selbständig vortransportiert und an den Waschbürsten vorbeigeführt wird. In beiden Fällen drehen sich, von oben gesehen, die oberen beiden Bürstenabschnitte 61,64 der in Fahrtrichtung des Fahrzeuges gesehen (in den Figuren 3 und 4 durch einen Pfeil dargestellt) linken Bürste 80 entgegen dem Uhrzeigersinn während sich die beiden oberen Bürstenabschnitte 61, 64 der rechten Bürste 81 im Uhrzeigersinn drehen. Jeweils entgegen den beiden oberen Bürstenabschnitten 61, 64 drehen sich der untere Bürstenabschnitt 74 der linken Bürste 80 im Uhrzeigersinn, während der untere Bürstenabschnitt 74 der rechten Bürste 81 sich entgegen dem Uhrzeigersinn dreht. Auf diese Weise rotieren die beiden unteren Bürstenabschnitte der beiden Bürsten 80 und 81, in Bezug auf das vordere Nummernschild des PKW's gesehen, nach außen, so daß die einzelnen Bürstenhaare 62 bei rotierender Bürste auf die Nummernschildfläche aufprallen auf seitlich nach außen weggeführt werden, wodurch es unmöglich wird, daß die Bürstenhaare hinter die Nummernschilder greifen und sich dort verhaken oder einklemmen. Im dargestellten Ausführungsbeispiel (Figuren 3 und 4) eilt die linke Bürste 80 der rechten Bürste 81 etwas (entgegen der Pfeilrichtung) voraus, so daß zunächst nur die Bürste 80 mittig im Frontbereich des Fahrzeuges angreift und anschließend nach links weggeführt wird, während gleichzeitig die rechte Bürste 81 nachgeführt wird, gleichfalls im mittleren Frontbereich gegen das Fahrzeug zur Anlage kommt, wenn die linke Bürste 80 seitlich weggeführt ist, damit diesen Teil des Wagens zum zweiten Mal reinigt, um danach in Fahrtrichtung gesehen nach rechts abgelenkt zu werden. Die Rundumwaschbürsten 80, 81 werden dann links bzw. rechts an den Fahrzeugseitenflächen bzw. das Fahrzeug in der Waschstraße vorgeschoben oder -gezogen und an den Waschbürsten vorbeigeführt, wobei die Drehrichtung der einzelnen Bürstenabschnitte selbstverständlich unverändert bleibt. Sollte der im Bereich der seitlichen Fensterflächen wirkende obere Bürstenabschnitt 61 der Bürsten 80, 81 der zur Anpassung an die Karosserieform konisch, sich nach oben erweiternd ausgebildet sein kann, beim Vorbeiführen an vorstehenden Fahrzeugteilen, beispielsweise einem Spiegel hängenbleiben, indem sich die einzelnen Bürstenhaare verhaken oder einklemmen, setzt automatisch die Funktion der Rutschkupplung zwischen dem mittleren Bürstenabschnitt 64 und dem oberen Bürstenabschnitt 61 ein, die die Rotationsbewegung des oberen Bürstenabschnittes 61 ausschaltet, während der mittlere Bürstenabschnitt 64 und der in entgegengesetzte Richtung rotierende untere Bürstenabschnitt 74 unverändert weiter gedreht werden. Durch einen mit der Rutschkupplung 65 zusammenwirkenden elektromechanischen oder elektronischen Schalter kann darüber hinaus der Antriebsmotor ohne weiteres bei Stillstand des oberen Bürstenabschnittes 64 abgeschaltet werden, so daß alle Bürstenabschnitte zur Ruhe kommen und die verklemmten Bürstenhaare befreit werden können.

Die Bürsten 80 und 81 werden an den seitlichen Wagenpartien bzw. das Fahrzeug an den Bürsten soweit vorbeigeführt, bis die Bürsten 80, 81 im hinteren Heckbereich des Fahrzeugs wieder nach innen geführt werden, um die Heckpartie des Wagens zu reinigen, wobei wiederum die linke Bürste 80 der rechten Bürste 81 etwas vorauseilt. Da die hinteren Nummernschilder des zu reinigenden Fahrzeuges höher als die vorderen am Fahrzeug montiert sind, werden diese nunmehr nicht von den unteren Bürstenabschnitten 74 gereinigt; vielmehr sorgen die mittleren Bürstenabschnitte 64 der Bürsten 80 und 81 für eine einwandfreie Reinigung im Bereich der hinteren Nummernschilder. Die Drehrichtung des mittleren Bürstenabschnittes 64 der linken Bürste 80 ist dabei nach wie vor entgegen dem Uhrzeigersinn, während der mittlere Bürstenabschnitt 64 der rechten Bürste 81 im Uhrzeigersinn rotiert. Dadurch gleiten die Bürstenhaare 62 der mittleren Bürstenabschnitte 64 von der Mitte des Nummernschildes nach außen auf diesem ab, wodurch nicht nur eine optimale Reinigung dieses Teils des Fahrzeuges gesichert wird, vielmehr wird auch jedes Hintergreifen der Bürstenhaare hinter das Nummernschild sicher verhindert.

Der Waschvorgang ist anschließend, nachdem die Waschbürsten 80 und 81 bis zur Fahrzeugmitte nacheinander geführt und dann vom Heckbereich abgesetzt worden sind, bei einer Waschstraße beendet. Die nachfolgenden Fahrzeuge werden dann in gleicher Weise von den Waschbürsten 80, 81 erfaßt und gereinigt. Sofern bei Portal-Waschanlagen eine weitere Reinigung gewünscht wird, können die Bürsten in umgekehrter Richtung, jedoch mit

gleicher Drehrichtung erneut um das Fahrzeug herumgeführt werden.

Die Reinigung der Dachpartie bzw. der Kühlerhaube oder des Kofferraumdeckels erfolgt in konventioneller Weise mit einer horizontal rotierenden Waschbürste.

Neben der in Fig. 1 dargestellten Ausführungsform einer erfindungsgemäßen Rundumwaschbürste sieht eine weitere Ausführungsform vor, eine Welle in einer Hohlwelle zu führen, wobei der Außendurchmesser der inneren Welle kleiner als der Innendurchmesser der Hohlwelle ist und die innere Welle in der Hohlwelle über im Abstand zueinander angeordnete Lager geführt wird.
Die innere Welle überragt die Hohlwelle beidseitig, wobei an einem überragenden Ende ein Antrieb für die Welle vorgesehen ist. An diesem Endteil der Rundumwaschbürste ist ein weiterer Antrieb für die Hohlwelle vorgesehen.
Auf dem gegenüberliegenden, überragenden Ende der inneren Welle ebenso wie auf der Hohlwelle ist jeweils mindestens ein Bürstenabschnitt angeordnet.
Vorzugsweise überragt die innere Welle die Hohlwelle nach unten und auf dem überragenden Wellenabschnitt ist ein unterer Bürstenabschnitt montiert, der im wesentlichen dieselben Abmessungen wie der untere Bürstenabschnitt 74 gemäß Fig. 1 und der dazugehörigen Beschreibung aufweist.
Auf der Hohlwelle sind vorzugsweise zwei Bürstenabschnitte, ähnlich den Bürstenabschnitten 61, 64 gemäß der Ausführungsform in Fig. 1 angeordnet, wobei ein Bürstenabschnitt unmittelbar auf der Hohlwelle aufsitzt und einen zweiten, um die Hohlwelle geführten Bürstenabschnitt indirekt über eine Rutschkupplung in der vorstehend beschriebenen Weise antreibt. Der indirekt mittels der Rutschkupplung angetriebene Bürstenabschnitt ist dazu beispielsweise über geeignete Lager auf der Hohlwelle aufgebracht.

Die beiden Antriebe für die Hohlwelle und die innere Welle werden dann mit entgegengesetzter Drehrichtung in Bewegung gesetzt, so daß die Wellen in zueinander entgegengesetzte Richtung rotieren, so daß auch die auf ihnen montierten Bürstenabschnitte sich gegeneinander drehen, so daß, wie vorstehend beschrieben, sowohl der untere Bürstenabschnitt als auch die beiden oberen Bürstenabschnitte derart rotieren, daß die Bürstenhaare sich nicht hinter den Nummernschildern oder anderen vorstehenden Teilen im Bereich der Stoßstangen verhaken können. Die Funktionsweise dieser zweiten Ausführungsform in einer Waschanlage bzw. einer Waschstraße entspricht der vorstehend zu Fig. 1 beschriebenen.

Mit der Erfindung ist es gelungen, eine Rundumwaschbürste zur Verfügung zu stellen, die in äußerst kompakter Bauweise und mit einfachen konstruktiven Mitteln einen erheblichen Fortschritt bei einer sorgfältigen Autowäsche ermöglicht, wodurch man ein deutliches Stück weiter gekommen ist auf dem Weg zur absoluten perfekten Reinigung von Kraftfahrzeugen.

Die erfindungsgemäße Rundumwaschbürste läßt sich, sofern besondere Gegebenheiten bei zu reinigenden Fahrzeugen vorhanden sind, ohne weiteres diesen in der erfindungsgemäßen Weise anpassen. Sofern beispielsweise in bestimmten Ländern die Nummernschilder in anderer Weise befestigt sind, kann die Rundumwaschbürste im Sinne der Erfindung angepaßt werden.

- 17 -

A n s p r ü c h e

1. Rundumwaschbürste, insbesondere für Kraftfahrzeugwaschanlagen, mit einer vertikal angeordneten, angetriebenen Bürstenwalze, dadurch gekennzeichnet, daß die Bürstenwalze in mindestens zwei vertikal hintereinander liegende Bürstenabschnitte (61, 64, 74) unterteilt ist, wobei mindestens ein Bürstenabschnitt (74) in eine zur Drehrichtung der übrigen Bürstenabschnitte (61, 64) umgekehrte Richtung drehbar ist.

2. Rundumwaschbürste nach Anspruch 1, dadurch gekennzeichnet, daß alle Bürstenabschnitte (61, 64, 74) über ein einziges Antriebsorgan (1) drehbar sind.

3. Rundumwaschbürste nach einem der Ansprüche 1 oder 2, dadurch gekennzeichnet, daß die Bürstenabschnitte (61, 64, 74) über eine vertikale Welle (1) angetrieben werden, die sich mittig durch die Bürstenwalze erstreckt.

4. Rundumwaschbürste nach einem der Ansprüche 1 bis 3, dadurch gekennzeichnet, daß mindestens ein Bürstenabschnitt (61, 64, 74) der Bürstenwalze in Drehrichtung der Welle (1) von dieser unmittelbar angetrieben wird.

5. Rundumwaschbürste nach Anspruch 4, dadurch gekennzeichnet, daß der untere Bürstenabschnitt (74) der Bürstenwalze in Drehrichtung der Welle (1) von dieser unmittelbar angetrieben wird.

6. Rundumwaschbürste nach einem der Ansprüche 4 oder 5, dadurch gekennzeichnet, daß ein oder mehrere der übrigen Bürstenabschnitte (61, 64) der Bürstenwalze über mindestens ein auf der Welle (1) angeordnetes Getriebe (3) zur Umkehrung der Drehrichtung der Welle (1) angetrieben werden.

7. Rundumwaschbürste nach Anspruch 6, dadurch gekennzeichnet, daß das Getriebe aus einem auf der Welle (1) festsitzenden Ritzel (2) besteht, das die Rotationsenergie der Welle (1) auf ein Kegelrad (6) überträgt, das ein um die Welle (1) im Abstand zu dieser angeordnetes Zahnrad (22, 23) in einer zur Drehrichtung der Welle (1) umgekehrten Richtung antreibt.

8. Rundumwaschbürste nach Anspruch 7, dadurch gekennzeichnet, daß sich vom Zahnrad (22) eine mit diesem verbundene Hülse (24) erstreckt, die in gleicher Weise im Abstand um die Welle (1) geführt wird.

9. Rundumwaschbürste nach Anspruch 8, dadurch gekennzeichnet, daß zumindest einer der nicht in Drehrichtung der Welle (1) rotierenden Bürstenabschnitte (61, 64) über die Hülse (24) unmittelbar angetrieben wird.

10. Rundumwaschbürste nach Anspruch 9, dadurch gekennzeichnet, daß mindestens einer der übrigen, nicht in Drehrichtung der Welle (1) rotierenden Bürstenabschnitte (61, 64) über eine Rutschkupplung (65) von dem unmittelbar angetriebenen Bürstenabschnitt (61, 64) angetrieben wird.

11. Rundumwaschbürste nach einem oder mehreren der Ansprüche 1 bis 10, dadurch gekennzeichnet, daß die Bürstenwalze aus drei Bürstenabschnitten (61, 64, 74) besteht, wobei der untere Bürstenabschnitt (74) in einer zu den Bürstenabschnitten (61, 64) umgekehrten Drehrichtung angetrieben wird.

12. Rundumwaschbürste nach einem oder mehreren der Ansprüche 1 bis 11, dadurch gekennzeichnet, daß die Bürstenwalzenabschnitte der einzelnen Bürstenabschnitte (61, 64, 74) einen gleichen Querschnitt aufweisen.

13. Rundumwaschbürste nach einem oder mehreren der Ansprüche 1 bis 11, dadurch gekennzeichnet, daß der obere, in Fensterhöhe des zu reinigenden Kraftfahrzeugs wirkende Bürstenabschnitt (61) einen sich konisch nach oben erweiternden Querschnitt aufweist.

14. Rundumwaschbürste nach einem oder mehreren der Ansprüche 1 bis 13, dadurch gekennzeichnet, daß der untere Bürstenabschnitt (74) derart angeordnet ist, daß die auf dem unteren Bürstenabschnitt (74) angeordneten Bürstenhaare (62) vollständig den Bereich des Nummernschildes im Frontbereich eines Kraftfahrzeuges erfassen, jedoch im Abstand zur Unterkante des Nummernschildes im Heckbereich eines Kraftfahrzeuges stehen.

15. Rundumwaschbürste nach einem oder mehreren der Ansprüche 1 bis 14, dadurch gekennzeichnet, daß zumindest der in Höhe der Fenster eines Kraftfahrzeuges angeordnete Bürstenabschnitt (61, 64) Bürstenhaare (62) aufweist, die spiralförmig auf den Bürstenwalzenabschnitten (60, 63) angeordnet sind.

16. Rundumwaschbürste nach Anspruch 1, dadurch gekennzeichnet, daß die einzelnen Bürstenabschnitte (61, 64, 74) über verschiedene Antriebsorgane drehbar sind.

17. Rundumwaschbürste nach Anspruch 16, dadurch gekennzeichnet, daß die Antriebsorgane aus zwei angetriebenen, gegeneinander rotierenden, ineinander geführten Wellen bestehen, wobei die innere Welle die äußere überragt und auf einem vorstehenden Teil der inneren Welle mindestens ein Bürstenabschnitt aufgebracht ist, der in eine zu den auf der äußeren Welle angeordneten Bürstenabschnitten umgekehrte Richtung rotiert.

0085938

FIG.1

0085938

FIG.2

0085938

FIG.3

FIG.4